# EUROPEAN PATENT APPLICATION

(11) **EP 4 016 205 A1**
(43) Date of publication of application: **22.06.2022**
(21) Application number: 21216604.5
(22) Date of filing: 21.12.2021
(51) Int. Cl.: G05B 17/02

(54) **DETERMINATION OF A MODE OF OPERATION OF A BOILER**

(30) Priority: 21.12.2020 GB 202020250
(71) Applicant: Centrica Hive Limited, Berkshire SL4 5GD (GB)
(72) Inventor: VETTIGLI, Giuseppe, Windsor SL4 5GD (GB); HAMOUZ, Miroslav, Windsor SL4 5GD (GB); DUNDAS, Caroline, Windsor SL4 5GD (GB)
(74) Representative: Kent, Miranda Jacket

(57) **Abstract**

This invention relates, but is not limited to, a method, a device, a computer program product and/or apparatus for determining the mode of operation of a boiler. The invention determines the mode of operation of a boiler through receiving a time series of electrical energy data of the boiler, determining energy events in the electrical energy data, determining a plurality of parameters of the energy events, and using an obtained model to determining the mode of operating of the boiler based on the obtained model and the plurality of parameters of the energy events. The invention further comprises a method of obtaining the model.

## Description

This invention relates, but is not limited to, a method, a device, a computer program product and/or apparatus for determining the mode of operation of a boiler.

Boilers are used to provide heated water in homes and other buildings. The heated water is commonly provided for domestic usage, such as shower and kitchen water as well as being used to provide heating, for example through radiators. Boilers commonly use gas or electricity as a heating source and their usage can form a large portion of a domestic energy usage.

Although the basic operation of boilers is widely known, boilers are becoming increasingly complicated and may have multiple ways of operating, or operation modes, which can operate dependent on the demand for heated water, instructions from a controller or the settings of the boiler. In modern boilers, the mode of operation of the boiler may be available through a control panel, but commonly users are not aware of the mode of operation because they do not closely monitor their boiler, or the information is not made obvious. The particular mode of operation or strategy used may also differ dependent on the boiler as there is a large range of different models and manufacturers. Furthermore, proprietary systems or codes may be used which limit the ability of a user to identify or interpret the mode of operation of the boiler.

EP3117566 shows a method for determining a state of operation of a domestic appliance in which time series data is obtained over a cycle of operation of the domestic appliance. The state of operation is then determined by comparing this time series data to an expected model of time series data of a plurality of domestic appliances. However, this system determines a current operation of the boiler, such as whether the boiler is in a burn state, based on pattern matching to particular boiler action, rather than a mode of operation occurring over a period of time.

Embodiments of the invention seek to provide approaches for allowing detection of modes of operation of boiler. In particular, where knowledge of proprietary information or an interface with the boiler controller are not required to determine the mode of operation.

Accordingly, in a first aspect of the invention, this is provided a method of building a model for detecting the mode of operation of boilers, the method comprising the steps of:
receiving a plurality of training data sets for a plurality of boilers, each training data set comprising a time series of electrical energy data of the plurality of boilers,
identifying an operation mode for each training data set,
determining energy events in each training data set and computing a plurality of parameters of the energy events, the plurality of parameters comprising a number, a duration, and a regularity of the timing of the energy events,
determining a measure of dependence between the identified operation mode and the determined plurality of parameters,
creating a model based on the determined measure of dependence, wherein the model is configured to assign a category indicative of the mode of operation of a boiler based on energy events in time series of electrical energy data from the boiler.

Determining energy events allows the focus of the method to shift from finding the shape of a signal at a particular time to look at the distribution of events within a time period. This allows the system to detect a mode of operation which may cause multiple events within a timespan or period. The use of a plurality of parameters which measure the number, duration and regularity of the energy events in the time series of electrical data allows determination between modes of operation because domestic hot water usage, which is dependent on user demand, is typically largely random, whereas other modes of operation of boilers such as pre-heat show more regular, repeating demands from the boiler. The use of each of the number, duration and regularity allows the system to distinguish between further modes of operation which may also have regular demands on the boiler because the parameters focus on core features of the repeating nature of the electrical energy data. The system also allows identification of pre-heat for different boiler systems because the parameters used are not dependent on the proprietary operating methods of the boilers, which can operate in different ways. Advantageously the mode of operation of the boiler can be used to consider or change the efficiency of use of the boiler, or advise a user of which mode the boiler is in.

Preferably the step of identifying an operation mode comprises at least one of:
outputting to a human operator a visual representation of each of the training data sets; and receiving an input from the human operator indicative of the category; and
obtaining control data from the plurality of boilers which identifies the operation mode.

The operation mode of the training data may be applied by a skilled human operator to allow the automated learning of the model, for instance by reviewing the time series information or energy event information in the training data. However, it is also possible that this information would be associated with the time series data, for instance by being collected from the boiler controller when collecting the data, available through a smart controller, or otherwise obtained.

Preferably the model is a classification model. The classification model assigning or estimating a category based on the energy events in the time series data, or assigning or estimating a probable category. Preferably the classification model provides a confidence measure estimating the probability that the assigned category is accurate.

Preferably the method further comprises the step of determining a measure of confidence in the model, the measure of confidence dependent on a probability of accurately identifying the mode of operation of a boiler.

Preferably the training data sets are obtained from a plurality of further boilers in a plurality of different locations. Preferably the further boiler information comprises multiple days of use of the plurality of further boilers. The use a wide variety of further boilers over multiple provides a broad training data set for the system and may improve performance. Preferably the training set comprises at least 50, 100 or 200 further boilers and/or time series.

Accordingly, in a second aspect of the invention, this is provided a method for determining a mode of operation of a boiler, the method comprising the steps of:
receiving a time series of electrical energy data of the boiler,
determining energy events in the electrical energy data,
determining a plurality of parameters of the energy events, the plurality of parameters comprising a number, a duration, and a regularity of the timing of the energy events,
obtaining a model for determining the mode of operation of a boiler, the model relating the mode of a boiler to a plurality of parameters determined from energy events in electrical energy data of boilers, and
determining the mode of operating of the boiler based on the received model and the plurality of parameters of the energy events.

Preferably the model is created according to the first aspect.

Preferably the received model is obtained from a storage device or server. Preferably the received model is obtained from a plurality of further boilers in a plurality of different locations to the boiler. Preferably the further boiler information comprises the plurality of parameters collected over multiple days of use of the plurality of further boilers.

Preferably the received model is a classification system or model. Preferably the step of determining the mode of operation of the boiler comprises the step of associate the boiler into one of a plurality of categories based on the classification system or model.

Preferably the determined modes of operation comprise at least one of an eco-mode and a pre-heat mode and a Time Proportional Integral (TPI) mode and/or a central heating mode. Preferably the determined modes of operation comprise a mode in which energy usage takes place without providing domestic hot water or central heating demand. Preferably the determined modes of operation are associated with the energy efficiency of the boiler. Preferably the method determines if the boiler is in eco-mode or pre-heat mode.

Pre-heat is an important mode of operation to determine as it can reduce the energy efficiency of the boiler because it preheats water in the boiler to allow instant hot water output. While this may be convenient it results in unnecessary heating and energy use and may increase household bills, boiler usage and/or maintenance requirements. A typical feature of pre-heat mode is a series of boiler activities (shown by energy events) where there is no, or limited, domestic hot water flow and/or central heating flows. Eco-mode is a mode where preheat is deactivated, this typically results in a longer time required to provide domestic hot water but means that the boiler is not active unless domestic hot water is requested, or central heating is required or demanded. Time Proportion Integral control is a boiler mode wherein the boiler controller attempts to maintain a substantially even or constant temperature. This may result in a very large number of energy events when central heating demand is present. Many boilers provide domestic hot water as well as providing hot water for central heating radiators. The central heating system uses a controller to control when hot water flows to the radiators to provide heating, the control may be based on timings or temperature dependent. When operating in a central heating mode long energy events will often be seen to provide enough hot water to heat the house or building.

Preferably the method further comprises determining the mode of operation of the boiler based on a plurality of time series of electrical energy data of the boiler and determining the mode of operation of the boiler for each of the plurality of time series.

Preferably the regularity of the timing of the energy events comprises a measurement of the length between energy events. Preferably the regularity of the timing of energy events comprises a standard deviation of the length of time, or interval, between energy events. Alternatively the regularity of the timing event may comprise a variance, an average deviation, standard error of the mean or other mathematical measure of the dispersion of the event energy timing, preferably relative to its mean.

Preferably the plurality of parameters further comprises a first and/or last time. Of an energy event in the time series of electrical energy data. Preferably the plurality of parameters further comprises a mean of the electrical energy during the energy events. Preferably the plurality of parameters comprises at least one of a standard deviation, mean, maximum or minimum, sum or count of any one or more of the plurality of parameters. Alternatively the plurality of parameters comprises a mathematical measure or numerical calculation of or with one or more of the plurality of parameters.

Preferably the time series of electrical energy data comprises at least one of current or voltage time series data. Preferably energy events are identified by an increase in the electrical energy data above a threshold, baseline or measure of base electrical energy usage, for instance a peak in the current or voltage. Preferably the current is determined by a current sensor, more preferably the sensor is a clip-on current sensor. The use of a clip-on sensor is advantageous because it provides a simple method of collecting data from any boiler, as a retrofit sensor is easily attachable or reversible attached to an electrical input, such as the power cord.

Preferably the step of determining energy events in the electrical energy data comprises determining energy events in a time window of the electrical energy data, optionally a daily time window. Preferably the method comprises the step of selecting a time window or period. Preferably the time period is a daily or regular time period. Preferably the time period is at least 6 hours. Preferably the time window is between 10pm and 7am, more preferably between 12.00am and 5.30am. The use of a time window allows the system to reduce complexity by avoiding periods of the day in which there are often large and/or complicated demands on the boiler, such as in the morning where usage in the bathroom and kitchen can obfuscate or reduce clarity in the water usage.

Preferably the method only relies on the time series of electrical energy data. Alternatively, the method comprises the step of obtaining temperature data of, or associated with, the boiler. The temperature data may comprise the hot water output temperature and/or radiator inlet and/or outlet temperature. It is advantageous that the system can provide accurate determinations based only on the electrical energy data. However, it is possible to use further time series, such as the temperature or flow time series aligned or associated with the electrical energy data to improve performance of the system. For instance, the presence, temperature or amount of flow of domestic hot water or central heating can be used to identify if a hot water demand exists in the building or if the central heating is activated.

Preferably the time series of electrical energy data is obtained from a sensor associated with the appliance, optionally a current or voltage sensor. Most preferably the time series of electrical energy data is obtained from a current sensor associated with the boiler. Alternatively, the electrical energy sensor is obtained from a sensor associated with the location of the boiler, for instance a smart meter, wherein the electrical energy data is disaggregated from other electrical energy data. Where an individual sensor is not available it is possible to obtain an electrical energy signal for the building or location of the boiler and disaggregate the power signal from the building electrical energy signal. This allows an application of the method without requiring an individual meter or sensor.

Preferably the method comprises the step of notifying a user of the mode of operation of the boiler. Optionally the method comprises the step of altering the state of the boiler or prompting a user to alter the state of the boiler. Advantageously the system can advise a user of the mode of operation of the boiler and suggest improvements based on energy efficiency or performance. This may be directly from a controller or processor, or through a personal electronic device, such as a notification on a mobile phone.

Preferably the method comprises the step of obtaining the time series of electrical energy data from the boiler over a plurality of days and determining the mode of operation of the boiler for each of the days. Preferably the mode of operation of the boiler is determined when a calculated probability of a correct determination reaches a threshold. Preferably where the mode of operation of the boiler is notified to the user when a probability of a correct determination reaches a threshold. Advantageously the system can assign a category to the boiler over a number of days (for instance up to 7 or 14 days) to improve the accuracy of the determination of the boiler and avoid false determinations. This allows the system to check that the mode of operation of the boiler is not varying, improving confidence in the determined mode. It may be preferable to use a threshold of accuracy (e.g. a number of days in which the same mode has been detected) before notifying a user of the determined mode. Preferably the threshold may depend on the number of mode determinations and/or a confidence in the detected mode accuracy or measures thereof.

Accordingly, in a third aspect of the invention, this is provided a system for determining a mode of operation of a boiler, the system comprising:
a sensor for obtaining a time series of electrical energy data from the boiler, and
a processor configured to:
   identify energy events in the time series of electrical energy data from the boiler,
   determine a plurality of parameters of the energy events, the plurality of parameters comprising a number, a duration, and a regularity of the timing of the energy events,
   obtain a model for determining the mode of operation of a boiler, the model relating the mode of a boiler to a plurality of parameters determined from energy events in electrical energy data of boilers, and
   determine the mode of operation of the boiler based on the obtained model and the plurality of parameters of the energy events, and

Output means for outputting the mode of operation of the boiler to a user.

Preferably the output means is a graphical user interface, for instance a personal electronic device such as a mobile telephone. Alternatively, the output means may be a light or sound or other effect.

Preferably the model is created according to the first aspect.

Accordingly, in a fourth aspect of the invention, this is provided a method for determining a mode of operation of a boiler, the method comprising the steps of:
receiving a time series of electrical energy data of the boiler,
determining energy events in the electrical energy data,
determining a plurality of parameters of the energy events,
obtaining a model for determining the mode of operation of a boiler, the model relating the mode of a boiler to a plurality of parameters determined from energy events in electrical energy data of boilers, and
determining the mode of operating of the boiler based on the obtained model and the plurality of parameters of the energy events.

Any feature in one aspect of the invention may be applied to other aspects of the invention, in any appropriate combination. In particular, method aspects may be applied to system, apparatus and computer program aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:
Figure 1 illustrates a system diagram of a monitoring system suitable for a boiler.
Figure 2a and 2b illustrates example sensor measurements for boilers in two different states.
Figures 3a, 3b and 3c illustrates example sensor measurements for boilers with complex states.
Figure 4 illustrates a method of collecting classification data for a boiler.
Figure 5 illustrates a method of constructing a classification system for a boiler mode of operation.
Figure 6 illustrates interdependence between various parameters.

Boilers are commonly used to heat water in domestic environments. Modern boilers have a plurality of modes where each mode may affect the operating efficiency, cost, or eco-friendliness of a boiler's operation over a period of time. However, the mode of operation of a boiler is often hard to calculate or not visible to a user without investigating the internal operation of the boiler. This may be because the mode of operation of a boiler cannot be identified by a single operation, but is rather dependent on the boiler's operations over a period of time, such as how frequently it activates or the type of activations it performs. Therefore, it is advantageous to design a method and system to determine the mode of operation of a boiler based on externally available data.

In particular, the electrical energy supplied to the boiler can be used to distinguish between modes of operation such as pre-heat (where instant hot water is made available by regular heating events) and Time Proportional Integral (TPI, where the central heating system attempts to maintain a substantially constant home temperature). This is because the electrical energy signal can be analysed. For instance, the current signal can be analysed to determined operational events or energy events. Energy events can be identified in a number of ways. For instance peak detection algorithms could be used, energy usage above a threshold, average or base level could be considered an energy event, or another variation in the energy signal could indicate an event. Using parameters relating to the number, duration and regularity of the timing of these energy events the method can identify modes of operation, as they can distinguish between the regularity of modes such as pre-heat when compared to domestic hot water usage, or other modes which may have some regularity but differ in the expected number or duration of events.

Parameters relating to the number, duration and regularity of the timing of the energy events allow a strong classification or categorisation system to be built without making determination overly complication or computationally intensive. However, it is possible to add further parameters to the system such as the size or amplitude of the energy events. In further cases information relating to the flow in the hot water outlet, or the central heating system can also be used to add information to the system. The parameters may be used directly, but preferably a mathematical operation is used to understand the parameters. The mathematical operation may be a standard deviation, a maximum, a minimum, a count or an average (mean or median) or other means of obtaining a measure of the relative size, spread or variation of the energy events. In particular, the system may use any one or more of:
a count of the number of energy events,
a standard deviation of the duration of the energy events,
a standard deviation of the interval between energy events and
a measurement of the time when first activity was detected.

Further optional parameters include any one or more of:
the timespan between first and last energy events,
a measurement of the time when the last energy event occurred,
the mean of the amplitude of the energy events,
the mean duration of an energy event,
the sum of the time of the energy events,
the standard deviation of the energy used in the time period,
the standard deviation of the amplitude of the energy events,
the difference between the minimum and maximum electrical energy used, and
the total electrical energy used across the period.

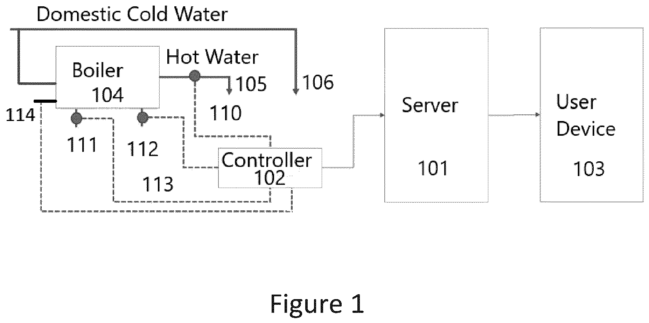

Figure 1 shows a monitoring system for a boiler 104. The boiler 104 receives water from a domestic cold water supply 106 and produces a hot water output 105. The boiler is also connected to a central heating system through outlet and return pipes which may lead to a radiator (not shown). The skilled person would understand variations in the boiler design and operation are possible, including further features and boilers which do not feed radiators directly. The hot water output 105 may feed directly to a domestic supply or may feed into a hot water storage tank.

The monitoring system of Figure 1 includes sensors attached to system components. Heating outlet sensor 111 and heating return sensor 112 may be temperature sensors configured to identify a change in temperature of the pipe indicating the presence of a flow. Similarly, hot water sensor 110 associated or attached to hot water output 105 may be a temperature sensor indicating flow of hot water from the boiler 104. The sensors 111,112,110 may alternatively be other sensors capable of measuring flow or related phenomena (e.g. temperature), able to indicate operation or amount of operation of the boiler or fluid flow. For instance, audio sensors, flow sensor or electromagnetic sensors may be used. Electrical energy sensor 114 is attached or associated with a power connection of the boiler 104 and is configured to detect the amount of electrical energy being used by the boiler. The electrical energy sensor 114 may be a current sensor or voltage sensor, or other suitable means for measuring electrical energy. Preferably the electrical energy sensor 114 is a current sensor or a voltage sensor. Preferably at least one, or all the sensors are attachable to the boiler, for example by clipping on to or grasping the wire/pipe they measure. In this way the system may easily be retrofitted to a boiler.

The sensors are preferably able to communicate with a controller 102. The controller 102 may be a microcontroller or other control device. It is preferably connected to the sensors by a connection means 113 which may be wired (e.g. a wire) or wireless (e.g. Bluetooth^{™} or Zigbee^{™}) for each sensor. In many cases it is preferably wired to allow the controller to power the sensors. The controller 102 is preferably linked to a server 101 (either directly or through one or more intermediate devices), with which it may communicate wired or wirelessly. The server may also be in communication with a user device 103 this is typically using the internet, although it is also possible a user device would connect on a local area network (including to the controller or an intermediary device such as a hub). The user device 103, (for instance a personal electronic device such as a mobile telephone or smart, or other user interactive device) may allow a user to interact with the controller and/or to send instructions to the controller and/or to receive notifications from the controller, for instance regarding a diagnostic problem or a determined mode of operation. The notification may be by text message or notification in an application on the user device 103. The notification may prompt the user to take an action to control the boiler, or may inform the user of an action already taken by a boiler controller.

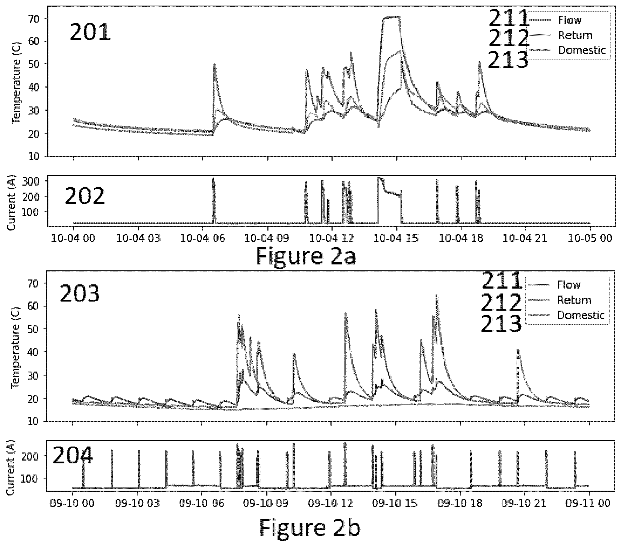

Figure 2a shows example sensor readings or a boiler operating in an eco-mode mode of operation. In this mode of operation the boiler only operates when hot water demand exists (such as domestic hot water or heating). In the top part 201 of the figure the temperature (degrees Celcius) outputs are shown, where the domestic water 213 (measured by sensor 110) has peaks throughout the day. These will be caused user actions, such as showering, using the kitchen tap etc. Here 201 a single central heating peak is seen at about 3pm in the flow and return signals 211, 212 (as measured by sensors 111, 112). The lower part of the figure shows a current plot (Amps). However, a voltage or other electrical signal plot may alternatively be used. The consumption spikes or energy events on the current plot (202) are correlated with the outlet temperature, with energy consumption resulting in hot-water usage or heating demand (where flow and return temperatures rise at the same time).

Figure 2b shows a different mode of operation. In contrast to the eco-mode operation shown in Figure 2a there are now a series of small current peaks throughout the day in the temperature plot 203. These do not appear to create a large increase in temperature of the overall system (e.g. limited effect on flow temperature and no visible effect on the domestic and return temperature), as none of the sensed temperatures rise above about 25 degrees, although current peaks are clearly seen in the plot 204. This is indicative of a pre-heat operative state. In pre-heat some amount of water is maintained at a high temperature so as to allow a quick response to any hot water request by a user (instead of a user having to wait a time period until the output water becomes hot enough for usage), this requires regular reheating due to temperature loss in the system. By using preheat the boiler is favouring comfort over cost reduction and low carbon emissions or efficiency. This operation state is often active by default on a boiler and the user may not be aware of it, for instance because it is an internal setting of the boiler. The pre-heat setting can be operated by heating water at a fixed time period, or activated when the water temperature drops below a threshold.

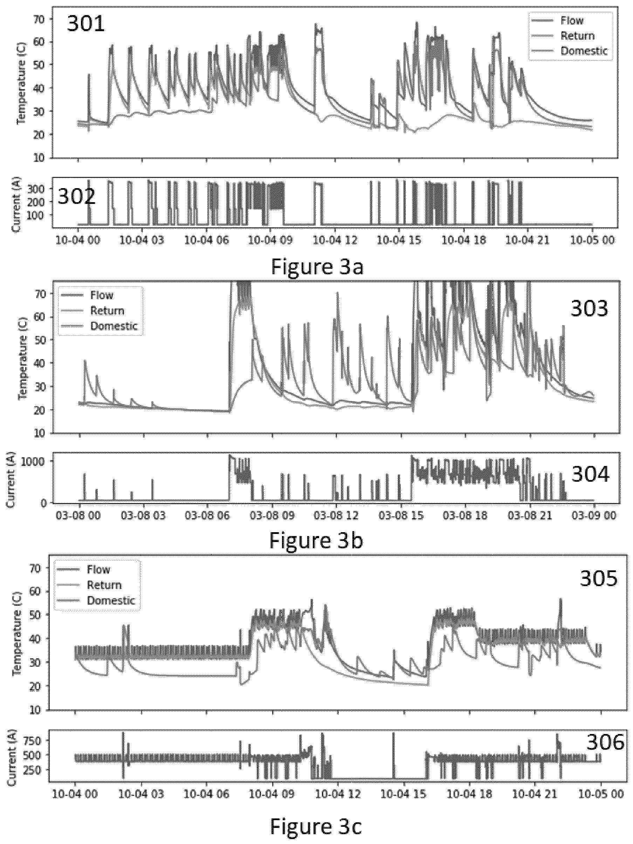

Figure 3 demonstrates that the identification of the state of operation of the boiler is in many cases more complex than the relatively distinct examples shown in Figure 2. The temperature plots 301 in Figure 3a show a boiler which does not use pre-heat but has frequent consumption throughout the night, this results in many current peaks across the day of the current plot 302. Similarly, in Figure 3b shows a boiler where small amounts of action are recorded in the temperature plot 303 overnight, with associated current spikes shown in the electrical plot 304. Plot 304 shoes a range of energy events, including energy events with different current peaks, or varying current peaks and sustained energy usage (see hour 18). Finally, a central heating system may be configured to provide heating throughout the day. Figure 3c demonstrates a series of temperature spikes throughout the time period of the temperature plot 305, with corresponding spikes shown in the current plot 306. This variation in the operation of different systems, and user impacts through demand for domestic water make it difficult to easily identify the operation state of the boiler. This is increased further when a mix of modes of operation is used, such as pre-heat and central heating demands.

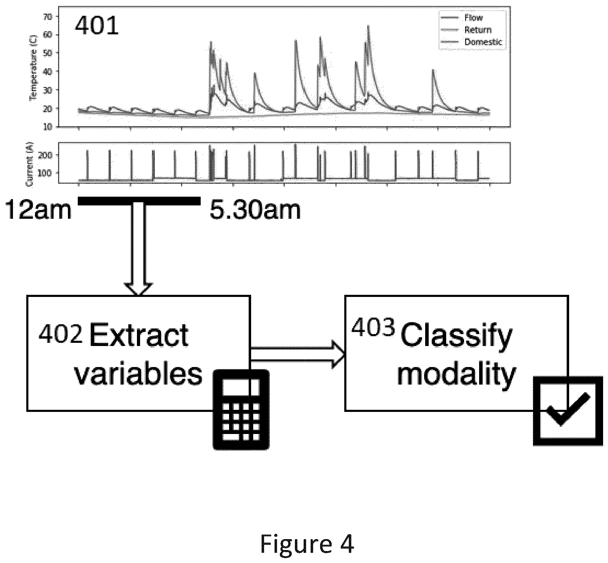

Figure 4 shows an example collection of boiler data. In a first step time-series data 401 is collected or otherwise obtained. This may be obtained from a plurality of systems as described in Figure 1, or otherwise measured. Figure 4 shows collection of both water temperature data and electrical signal data (in this case current), however in a particular case only the current (A) data is used. The current data of the whole period may be used, but preferably a selected or pre-set portion of the time data is used. This may be selected by the controller or a programmer of the system. Preferably the time window is a period of typically low use of domestic hot water, such as between midnight and 5.30am, however other time windows are possible. The time window should be of a reasonable length so as to capture a range of operation, preferably at least 4 or 5 hours. Once the time series data has been captured the variables or parameters can be extracted 402 from the time series. The parameters can then be put into a classification system or method 403 to determine the operation state of the boiler.

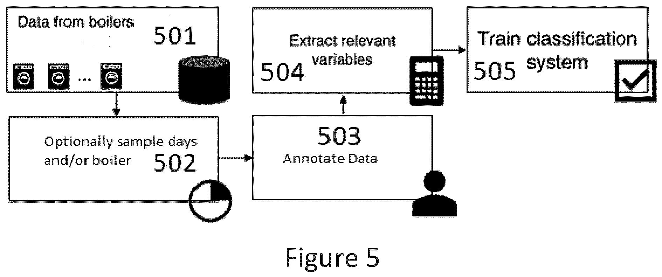

Figure 5 shows the classification system may be built using machine learning or classification analysis. For instance, using a random forest algorithm, although other algorithms will be known such as neural nets or support vector machines. A random forest algorithm uses a training set of data to build a set of decision trees or classification trees (typically sampling from the training set for each decision tree and selecting a random subset of features at each step of the tree to create a range of decision trees which will average to an accurate classification). There may be any number of decision trees used in the random forest, for instance 100 or 500. When classifying a new boiler, the data is fed into the set of trained decision trees and the operating mode is determined based on a summary, average or vote from each of the outcomes of each of the trained decision trees. The classification system can take as inputs the selection of parameters and use a training process to identify a suitable classification based on the selected parameters. The system may break down the space of the parameters into subregions, with each subregion representing a mode of operation of the boiler.

The classification system uses training data, this data is collected from a range of other boilers 501 and may be collected across multiple different days and/or boilers. Each data set used in the training data related comprises a time series of current data for a time period, in this case time period between midnight and 5.30am. The training data may include multiple days of the same boiler in the same of different modes, or multiple different boilers. This training data may optionally be sampled 502 to reduce memory or computation requirements or to avoid replication of highly similar data. The training data is identified, by annotating 503 the mode of operation, for instance through human intervention, by tags, annotations or otherwise further data included with the time series of current data, or more complex identification means. The time series of current data is then analysed or processed to identify energy events, relating to peaks or fluctuations from a base level or threshold in the time series data. This process is similar to a single boiler example. The relevant parameters, variables or numerical representations of the relationships of and between energy events is then be extracted 504. The training data can then be used to train 505 a classifier based on the parameters, such as by the random forest method discussed above, or other classification method. This model is then able assign a category indicative of the mode of operation of a further or test boiler based on time series current data from that further or test boiler. The training of the classification system may be relatively computationally expensive, but can advantageously allow for a very simple classification of new data.

When classifying a boiler the controller 102 may receive current data from sensor 114. It may collect the current data over the required time period, or plurality of time periods. The controller 102 may then send this data to the server 101 or process it locally. The processing requires receiving or obtaining the classification model, which may be stored on the controller, or on the server or downloadable from the server. The controller (or server) can then classify the current data for the or each time period based on the classification model, obtaining a determined state of operation for the or each time period. In some embodiments the processing may be shared between the controller and/or server or other computation device, for instance the controller may identify energy events and the server may perform the classification.

Where multiple time periods are used the controller can perform a check that the same, or expected mode of operation has been calculated in each period, or if a confidence threshold or probability is not achieved (for instance because the mode of operation has been determined to be different 20%, 50% or 70% of the time periods), delay a determination until further current data is available. Where single or multiple time periods are used the controller can calculate a confidence or probability in the accuracy of the determination, this may be calculated by the confidence of the model in the answer (e.g. how many, or the percentage of the random forest decision trees predict the determined mode of operation). It is possible that the confidence in the accuracy of each prediction and the number of predictions based on different time periods are mathematically combined to form an overall confidence score or accuracy probability for multiple time period measurements. Once a determination of the mode of operation of the boiler has been made this can be notified to the user through user device(s) 102. For instance, this may be in the form of a notification or a prompt to change the mode of operation. Alternatively, the controller 102 or server 101 may automatically send an instruction to change the mode of operation of the boiler if this is available (based on the available control of the boiler and previous user instructions).

The server will typically include other conventional hardware and software components as known to those skilled in the art. While a specific architecture is shown by way of example and specific software technologies and vendors have been mentioned, any appropriate hardware / software architecture may be employed. Functional components indicated as separate may be combined and vice versa. For example, the functions of server 101 may in practice be implemented by multiple separate server devices, e.g. by a cluster of servers.

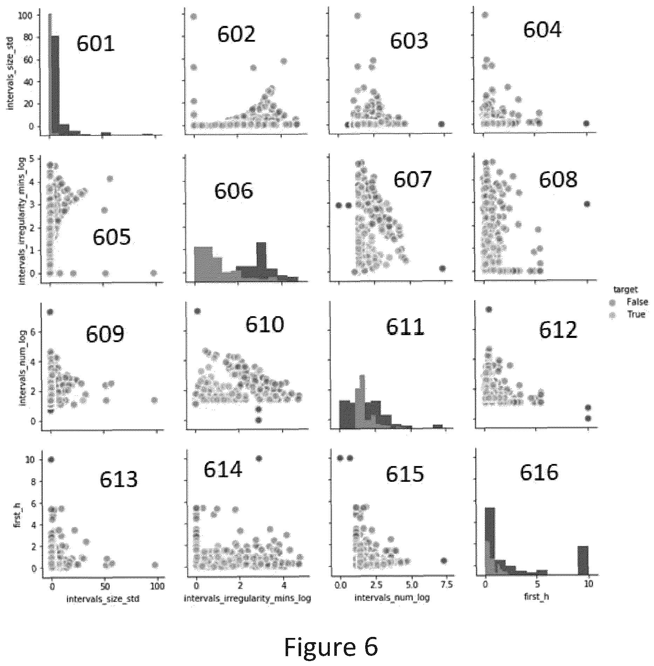

Figure 6 shows graphs of correlations between the parameters or numerical features of the events of the boiler time series data. The data sets used to create the plots have been created from data recorded about a plurality of boilers in houses, typically over a plurality of time periods, where approximately half of the boilers use a pre-heat mode (labelled True) and the remaining half use an eco-mode (labelled False). Each point on each graph represents a data set from a training period (in this case between midnight ant 5.30pm). Parameters relating to the duration of energy events (in this case the standard deviation), the time between energy events (standard deviation), the number of energy events and the time of the first event occurring (in hours) are shown. A log function has been used to allow simpler visualisation of the parameters. Each of these parameters may have been available from the current time series of the boiler.

The first row of graphs 601, 602, 603, and 604 show the standard deviation of the duration of energy events on the y-axis. The second row of graphs 605, 606, 607, and 608 show the standard deviation of the time between energy events. The third row of graphs 609, 610, 611 and 6112 show the number of energy events and the final row of graphs 613, 614, 615 and 616 shows the time of the first energy event (in hours from the start of the time period). In each graph dense outliers may represent default values where no information is available (e.g. values of 10 in first h). The horizontal x axes show the standard deviation of the duration of energy, the standard deviation of the time between energy events, the number of intervals and the time of the first energy event respectively. This means that the matrix of plots shows the relationships between each of the parameters in turn. The diagonal plots 601, 606, 611 and 616 are shown as histograms (as they would otherwise plot the same data on both axis) which demonstrate the relationship between the two modes for that variable. It is visible from the plots that although some differentiation is possible for each of the parameters, none is able to clearly distinguish the modes. For instance, the pre-heat mode shows less variation in the length of intervals in plot 606 and a more consistent number of intervals in plot 611.

It will be understood that the present invention has been described above purely by way of example, and modification of detail can be made within the scope of the invention.

The above embodiments and examples are to be understood as illustrative examples. Further embodiments, aspects or examples are envisaged. It is to be understood that any feature described in relation to any one embodiment, aspect or example may be used alone, or in combination with other features described, and may also be used in combination with one or more features of any other of the embodiments, aspects or examples, or any combination of any other of the embodiments, aspects or examples. Furthermore, equivalents and modifications not described above may also be employed without departing from the scope of the invention, which is defined in the accompanying claims.

### THE DISCLOSURE OF THE PRESENT APPLICATION ALSO INCLUDES THE FOLLOWING NUMBERED CLAUSES:

1. A method of building a model for detecting the mode of operation of boilers, the method comprising the steps of:
   receiving a plurality of training data sets for a plurality of boilers, each training data set comprising a time series of electrical energy data of the plurality of boilers,
   identifying an operation mode for each training data set,
   determining energy events in each training data set and computing a plurality of parameters of the energy events, the plurality of parameters comprising a number, a duration, and a regularity of the timing of the energy events,
   determining a measure of dependence between the identified operation mode and the determined plurality of parameters,
   creating a model based on the determined measure of dependence, wherein the model is configured to assign a category indicative of the mode of operation of a boiler based on energy events in time series of electrical energy data from the boiler.
2. A method of clause 1 wherein the step of identifying an operation mode comprises at least one of:
   outputting to a human operator a visual representation of each of the training data sets; and receiving an input from the human operator indicative of the category; and
   obtaining control data from the plurality of boilers which identifies the operation mode.
3. A method of clause 1 or 2 wherein the model is a classification model, optionally wherein the classification model provides a confidence measure estimating the probability that the assigned category is accurate.
4. A method of clause 1 to 3 further comprises the step of determining a measure of confidence in the model, the measure of confidence dependent on a probability of accurately identifying the mode of operation of a boiler.
5. A method of clause 1 to 4 wherein the training data sets are obtained from a plurality of further boilers in a plurality of different locations, optionally where the training data sets are collected over multiple days of use of the plurality of further boilers.
6. A method for determining a mode of operation of a boiler, the method comprising the steps of:
   receiving a time series of electrical energy data of the boiler,
   determining energy events in the electrical energy data,
   determining a plurality of parameters of the energy events, the plurality of parameters comprising a number, a duration, and a regularity of the timing of the energy events,
   obtaining a model for determining the mode of operation of a boiler, the model relating the mode of a boiler to a plurality of parameters determined from energy events in electrical energy data of boilers, and
   determining the mode of operating of the boiler based on the obtained model and the plurality of parameters of the energy events.
7. A method of clause 6 wherein the model is created according to the method of any one of clauses 1 to 5.
8. A method of clause 6 or 7 wherein the time series of electrical energy data is obtained from a current sensor associated with the boiler.
9. A method of clauses 6 to 8 wherein the received model is a classification model and wherein the step of determining the mode of operation of the boiler comprises associating the boiler into one of a plurality of categories based on the classification model.
10. A method of clauses 6 to 9 further comprising determining the mode of operation of the boiler based on a plurality of time series of electrical energy data of the boiler and determining the mode of operation of the boiler for each of the plurality of time series.
11. A method of clauses 6 to 10 comprising any one or more of the steps of:
   notifying a user of the mode of operation of the boiler, and/or
   sending a control signal to the boiler altering the state of the boiler, an/or
   prompting a user to alter the state of the boiler.
12. A method of clauses 1 to 11 wherein the determined modes of operation comprise at least one of an eco-mode and a pre-heat mode.
13. A method of clauses 1 to 12 wherein the determined modes of operation comprise a mode in which energy usage takes place without providing domestic hot water or central heating demand.
14. A method of clauses 1 to 13 wherein the regularity of the timing of the energy events comprises a standard deviation of the length of time between energy events.
15. A method of clauses 1 to 14 wherein the plurality of parameters further comprises a first and/or last time of an energy event in the time series of electrical energy data.
16. A method of clauses 1 to 15 wherein energy events are identified by an increase in the electrical energy data above a threshold or baseline of electrical energy usage.
17. A method of clauses 1 to 16 wherein the time series of electrical energy data comprises at least one of current or voltage time series data.
18. A method of clauses 1 to 17 wherein the step of determining energy events in the electrical energy data comprises determining energy events in a time window of the electrical energy data, optionally a daily time window.
19. A method of clauses 1 to 18 wherein the mode of operation of the boiler is determined when a calculated probability of a correct determination reaches a threshold.
20. A system for determining a mode of operation of a boiler, the system comprising:
   a sensor for obtaining a time series of electrical energy data from the boiler, and
   a processor configured to:
      identify energy events in the time series of electrical energy data from the boiler,
      determine a plurality of parameters of the energy events, the plurality of parameters comprising a number, a duration, and a regularity of the timing of the energy events,
      obtain a model for determining the mode of operation of a boiler, the model relating the mode of a boiler to a plurality of parameters determined from energy events in electrical energy data of boilers, and
      determine the mode of operation of the boiler based on the obtained model and the plurality of parameters of the energy events, and

Output means for outputting the mode of operation of the boiler to a user.

## Claims

1. A method of building a model for detecting the mode of operation of boilers, the method comprising the steps of:
receiving a plurality of training data sets for a plurality of boilers, each training data set comprising a time series of electrical energy data of the plurality of boilers,
identifying an operation mode for each training data set,
determining energy events in each training data set and computing a plurality of parameters of the energy events, the plurality of parameters comprising a number, a duration, and a regularity of the timing of the energy events,
determining a measure of dependence between the identified operation mode and the determined plurality of parameters,
creating a model based on the determined measure of dependence, wherein the model is configured to assign a category indicative of the mode of operation of a boiler based on energy events in time series of electrical energy data from the boiler.

2. A method as claimed in claim 1 wherein the step of identifying an operation mode comprises at least one of:
outputting to a human operator a visual representation of each of the training data sets; and receiving an input from the human operator indicative of the category; and
obtaining control data from the plurality of boilers which identifies the operation mode.

3. A method as claimed in either one of claims 1 or 2 wherein the model is a classification model, optionally wherein the classification model provides a confidence measure estimating the probability that the assigned category is accurate and/or wherein the method further comprises the step of determining a measure of confidence in the model, the measure of confidence dependent on a probability of accurately identifying the mode of operation of a boiler.

4. A method as claimed in any one of claims 1 to 3 wherein the training data sets are obtained from a plurality of further boilers in a plurality of different locations, optionally where the training data sets are collected over multiple days of use of the plurality of further boilers.

5. A method for determining a mode of operation of a boiler, the method comprising the steps of:
receiving a time series of electrical energy data of the boiler,
determining energy events in the electrical energy data,
determining a plurality of parameters of the energy events, the plurality of parameters comprising a number, a duration, and a regularity of the timing of the energy events,
obtaining a model for determining the mode of operation of a boiler, the model relating the mode of a boiler to a plurality of parameters determined from energy events in electrical energy data of boilers, and
determining the mode of operating of the boiler based on the obtained model and the plurality of parameters of the energy events.

6. A method as claimed in claim 5 wherein the model is created according to the method of any one of claims 1 to 4.

7. A method as claimed in any one of claims 5 or 6 wherein the received model is a classification model and wherein the step of determining the mode of operation of the boiler comprises associating the boiler into one of a plurality of categories based on the classification model.

8. A method as claimed in any one of claims 5 to 7 further comprising determining the mode of operation of the boiler based on a plurality of time series of electrical energy data of the boiler and determining the mode of operation of the boiler for each of the plurality of time series.

9. A method as claim in any one of claims 5 to 8 comprising any one or more of the steps of:
notifying a user of the mode of operation of the boiler, and/or
sending a control signal to the boiler altering the state of the boiler, an/or
prompting a user to alter the state of the boiler.

10. A method as claimed in any one of claims 1 to 9 wherein the determined modes of operation comprise at least one of an eco-mode and a pre-heat mode; and/or wherein the determined modes of operation comprise a mode in which energy usage takes place without providing domestic hot water or central heating demand.

11. A method as claimed in any one of claims 1 to 10 wherein the regularity of the timing of the energy events comprises a standard deviation of the length of time between energy events and/or wherein energy events are identified by an increase in the electrical energy data above a threshold or baseline of electrical energy usage.

12. A method as claimed in any one of claims 1 to 11 wherein the plurality of parameters further comprises a first and/or last time of an energy event in the time series of electrical energy data.

13. A method as claimed in any one of claims 1 to 12 wherein the time series of electrical energy data is obtained from a current sensor associated with the boiler and/or wherein the time series of electrical energy data comprises at least one of current or voltage time series data.

14. A method as claimed in any one of claims 1 to 13 wherein the step of determining energy events in the electrical energy data comprises determining energy events in a time window of the electrical energy data, optionally a daily time window; and/or wherein the mode of operation of the boiler is determined when a calculated probability of a correct determination reaches a threshold.

15. A system for determining a mode of operation of a boiler, the system comprising:
a sensor for obtaining a time series of electrical energy data from the boiler, and
a processor configured to:
identify energy events in the time series of electrical energy data from the boiler,
determine a plurality of parameters of the energy events, the plurality of parameters comprising a number, a duration, and a regularity of the timing of the energy events,
obtain a model for determining the mode of operation of a boiler, the model relating the mode of a boiler to a plurality of parameters determined from energy events in electrical energy data of boilers, and
determine the mode of operation of the boiler based on the obtained model and the plurality of parameters of the energy events, and
Output means for outputting the mode of operation of the boiler to a user.
